# EUROPEAN PATENT APPLICATION

(11) **EP 4 786 149 A1**
(43) Date of publication of application: **05.08.2026**
(21) Application number: 26155134.5
(22) Date of filing: 29.01.2026
(51) Int. Cl.: B29C 64/209, B29C 70/30, B33Y 30/00, B29C 70/38

(54) **SYSTEM FOR DEPOSITING CONTINUOUS NANO-FIBER FILAMENTS ON THE SURFACE OF A 3D MOLD**

(30) Priority: 31.01.2025 IT 202500001788
(71) Applicant: Ciurleo, Daniele, 00132 Rome (RM) (IT)
(72) Inventor: Ciurleo, Daniele, 00132 Rome (RM) (IT)
(74) Representative: Fezzardi, Antonio

(57) **Abstract**

A system for depositing continuous nano-fiber filaments on the surface of a 3D mold (ST1) comprises one or more robotic arms (AR1, AR2) with at least 5 degrees of freedom, provided with respective print heads (J1, J2), configured to move such heads keeping them perpendicular to the surface of the mold (ST1), onto which a multilayer fabric is made by depositing the polymeric nano/microfibers, obtained by blowing hot pressurized air on the filament exiting the print head; in which each print head (J1, J2) is configured to emit and deposit, continuously, in an even and random manner, the nano/microfiber on said mold (ST1) of non-stick material; and in which each print head (J1, J2) comprises in combination: a nozzle (W1) of the known type, which extrudes the material in a semiliquid phase, a side module, fixed onto said nozzle (W1), provided with a device that blows hot pressurized air in the tangential and coaxial directions against a filament (u) exiting the nozzle (W1) and with two heating blocks (N, S) that heat the aforesaid elements.

## Description

The present invention relates to the field of Additive Manufacturing (AM), and, in particular, it relates to fused filament fabrication (FFF) 3D printing, for producing garments or items in synthetic fabric, and, more specifically, it relates to a machine that, by means of a specific print head, emits continuous nano/microfiber filaments and deposits them, in a homogeneous manner, onto a three-dimensional mold. such a machine, or 3D printer, produces items of clothing, preferably technical, lightweight, and resistant, creating multilayer fabrics, substantially without producing waste and using filaments of plastic material already on the market for common 3D printers.

conventional production processes for garments or fabric items are currently known, which essentially comprise three steps: cutting, sewing, and assembly. The fabric, usually stored by manufacturers in the form of rolls, to reduce the bulk thereof, is cut and shaped, automatically or manually, following special patterns, and the pieces obtained therefrom are sewn together to create the final shape. At this point, all the details such as zippers, buttons, labels and/or other accessories are added, and each garment is subjected to special chemical treatments to improve the appearance or properties thereof. To date, such a process is fully standardized, such to allow achieving large volumes of garments at a very low cost.

However, the same process has a high environmental impact: it requires large quantities of raw materials (fabrics, water and energy) and generates waste and contributing to the pollution of the air and of the water. During the cutting step, enormous quantities of offcuts or scraps are produced, which generally may not be reused, whereas in the washing steps, chemicals harmful to the environment as well as to health are employed.

Furthermore, in the case of technical garments the assembly of multiple layers by means of sewing is also generally provided. Therefore, even greater quantities of waste are generated, and the application of heat-sealing tapes must be provided to seal the holes of the seams.

In brief, the manufacture of the single garment, despite being fully standardized, is long, complex and requires the use of different pieces of equipment. In addition, the presence of multiple layers of fabric, assembled with seams heat-sealed by means of adhesives and/or heat, makes the recycling of the entire garment almost impossible, or very costly.

Therefore, today, as sustainability has assumed a central role in the various sectors of the economy, the textile industry is also moving toward more sustainable processes based on the use of modern technologies.

In this regard, for manufacturing new products, Additive Manufacturing, characterized by high precision and low production costs, is being increasingly adopted. Such manufacturing process, as opposed to conventional ones, allows to achieve a product, in a single step, by adding material, therefore: no scrap or other production waste is generated, thus optimizing the utilization of raw materials; no subsequent machining operations are required, thus minimizing the required tools, times and process costs; and, above all, it is possible to achieve monolithic parts even with complex geometries, additional details and inner channels.

It is known that, among AM processes one of the most common is FFF 3D printing, based on the extrusion of multiple layers of material, which operates by depositing a filament, preferably of thermoplastic material, originating from a coil and passing through an extruder that heats, melts, and extrudes said material through a nozzle. The extruder and the nozzle form the print head, which moves controlled by the computer with respect to the work plane, and draws each layer, one after the other. Therefore, when the print head deposits the filament, the extruded plastic melts onto the preceding layer and then hardens with the aid of cooling fans mounted on the head itself.

In particular, numerous FFF 3D printing technologies have also been developed to achieve textile products: for example, in the biomedical field, sheets of fabric and/or fabric membranes made of nano/microfiber, with breathable and waterproof features, are adopted, printed by combining the fundamentals of AM and electrospinning technique.

Such processes are, however, still not widely adopted among manufacturers of the textile sector because they are very expensive.

Patent application no. WO2023218328 A1, in the name of the King Abdullah University of Science and Technology, has instead proposed a printing system which combines the extrusion of the material with melt-blowing, transforming the filament into ultrafine fibers. In detail, it provides a print head intended exclusively for filament emission and a device that blows pressurized air against said filament at the outlet of the extruder, in a semi-liquid phase, so as to produce said ultrafine filaments in nano/microfiber.

However, the aforesaid invention does not provide any means for moving the printing modules; moreover, it exclusively allows reinforcing other products, but not manufacturing them from scratch.

Therefore, it is the main object of the present finding to overcome the limitations of existing technologies, by providing a machine or printer for the sustainable production of garments or items made of synthetic fabric.

This has been achieved, according to the present invention, also using components already available on the market, by providing a system comprising one or more robotic arms with at least 5 degrees of freedom, provided with respective print heads, which move while remaining perpendicular to the surface of a three-dimensional mold, on which multilayer fabrics are produced by depositing the polymeric nano/microfibres, obtained by blowing pressurized hot air onto the extruded filament.

In fact, it is the object of the present invention to provide a machine for producing garments or items made of fabric with a single device and in a single step, thus obtaining an item without seams, without waste and totally recyclable. AM allows to minimize material waste; in fact, only the material that is to be present in the final product is transformed into fiber.

A better understanding of the invention will be achieved by means of the following detailed description and with reference to the accompanying Figures that illustrate some preferred embodiments by way of non-limiting examples.

In the drawings:

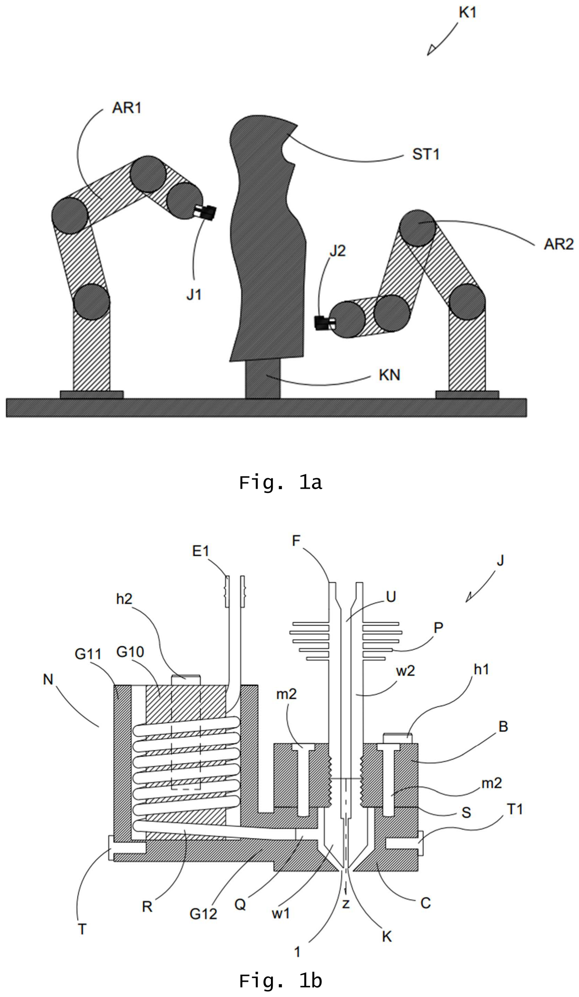

Figure 1a shows a side sectional view of an embodiment of a machine or printer for producing garments or items made of synthetic fabric, comprising two robotic arms (AR1, AR2), respectively provided with two print heads (J1, J2), and a mold (ST1);
Figure 1b shows a front sectional view of an embodiment of the print head (J) for "Fused Filament Fabrication" 3D printers, externally provided with two heated blocks (S, N), where a nozzle (W1) and a passage tube for pressurized hot air, provided with a first part (R) wound in a spiral about a heated cylinder (G10), and a second horizontal part (Q) that ends with an opening orthogonal to the same nozzle, are accommodated, respectively;
Figures 2a and 2b show two views of a detail of the print head (J) of Figure 101, in which the end portion of the nozzle (W1) and the meeting area (V) between the filament and the pressurized air are highlighted, respectively empty, before printing, and with the fluids in motion, during printing;
Figure 3a shows a top sectional view of an embodiment of the print head (J), in which the y-axis is shown, representative of the axis of the final part of the air tube (Q), arranged at 90° and offset with respect to the z-axis of the nozzle (W1);
Figure 3b shows a top sectional view of an embodiment of the heating block (S) of the print head (J), provided with a central hole (w3) for the insertion of the nozzle (W1);
Figure 4 shows an example of a possible diagram of the path of the movement of the print head (J) with respect to the mold (ST1);
Figure 5a shows a top simplified view of the print head (J), during the printing step, and of the jet (S9), substantially conical, of nano/microfibers exiting the extruder (W1);
Figure 5b shows a simplified front sectional view of the jet (S9) of nano/microfibers at a specific distance (w9) from the outlet section of the extruder (W1).

with reference to the Figures described above, the present invention provides a system for manufacturing garments or items made of nano/microfibre, by means of FFF 3D printing and melt-blowing.

In the preferred embodiment described, such 3D printing system comprises one or more print heads (J1, J2), mounted on respective robotic arms (AR), each one with at least five degrees of freedom, which continuously emit and deposit, in a homogeneous and random manner, the nano/microfibre onto a three-dimensional mold (ST1) made of non-stick material, creating multilayer fabrics, which are lightweight and strong, substantially without producing waste. One of the peculiar features of the present invention is that each print head (J1, J2), in addition to a nozzle (W1) of the known type, which extrudes the material in a semi-liquid state, as it occurs in common FFF 3D printers, comprises a side module, fastened to said nozzle (W1), provided with a device that blows pressurized hot air in a tangential and coaxial directions against the filament (U) exiting the nozzle (W1), and with two heating blocks (N, S) that heat the aforesaid elements.

The filament (U), characterized by a diameter negligible with respect to the length and conventionally stored on coils, usually consists of one or more polymers, thermoplastic polymers, elastomers, nanoparticles, or additives. For example, it may consist of a bioplastic, such as polylactic acid (PLA), or of a technical plastic material, such as polycarbonate, acrylonitrile-butadiene-styrene, polyamide, TPU, PTFE, and PET-G.

As it is known for conventional 3D printers, the filament (U) is inserted into a first metal tube (w2) and flows into a channel (F), with a longitudinal z-axis defined by the first metal tube (w2) itself and by the nozzle (W1), which is arranged coaxially and adjacent downstream of the first tube (w2), where the filament itself is heated and exits in a semi-liquid phase.

The side module is fastened to the print head to reduce heat loss and increase thermal efficiency.

The filament (U) is therefore inserted, still in a solid phase, inside said first metal tube (w2), which, in the initial part, is preferably provided with cooling flaps (P), so that the filament (U) does not melt immediately and may be pushed toward the nozzle (W1). Said first tube (w2) and said nozzle (W1) both have an inner diameter greater than or equal to the diameter of the filament (U), and are preferably made of metal, heat-resistant materials, and are fastened - for example by means of threading - to a heating block (S) consisting of an upper block (B) and a lower one (C), configured to melt the filament (U). said lower heating block (C), is provided with a cavity for accommodating the nozzle (W1) having a tapering (1) of the area at the outlet of the same nozzle, a few millimeters from the through hole (K) thereof, so as to create a sort of secondary nozzle (C), where the extruded filament meets the tangential and coaxial pressurized hot air jet, in a meeting area (V).

The secondary nozzle (C) and the nozzle (W1) inner thereto preferably have a conical inner shape, and the opening angles of the cones are from 60° to 140°. The cones are configured so that the vertices thereof are on the longitudinal z-axis, in the meeting area (V).

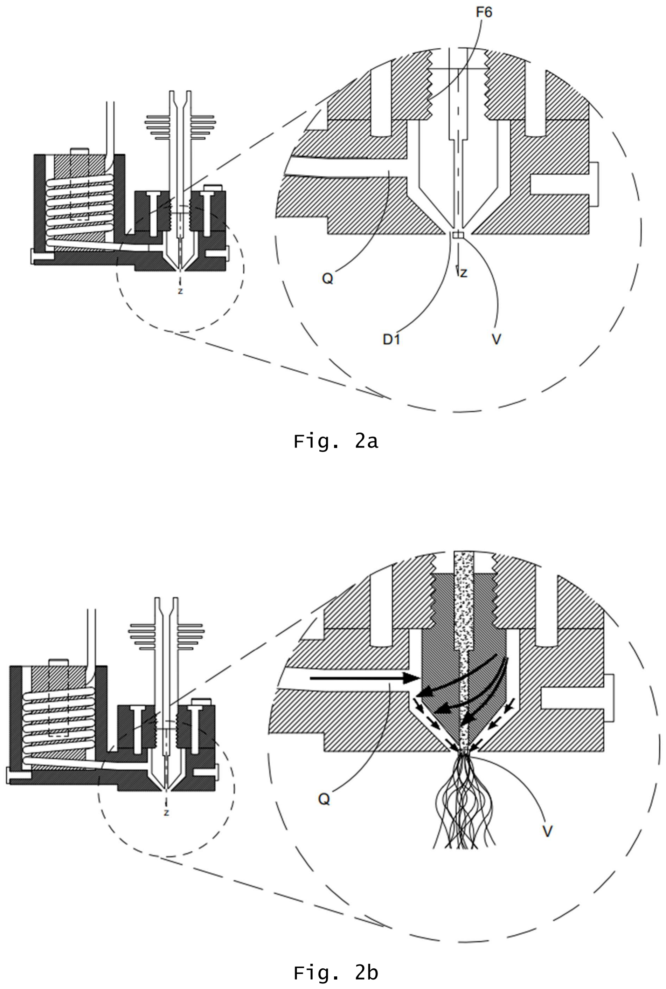

with reference to Figure 2a, the distance (D1) between the through hole (K) of the nozzle (W1) and the tapered area (1) may be varied depending on requirements, by mechanically adjusting it by means of the thread (F6).

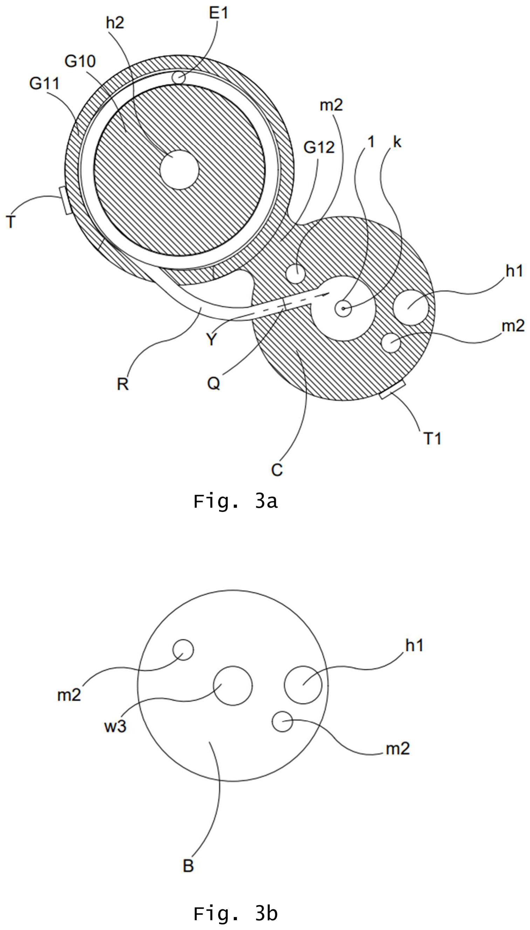

with reference to Figure 3a, the print head (J) contains at least one air inlet duct (Q) arranged substantially at 90° with respect to the z-axis and offset, with the Y-axis tangential with respect to the z-axis of the nozzle (W1) and (c). In other words, by means of the side inlet opening (Q), the air is conveyed to rotate about the nozzle (W1) and forced to exit from the secondary nozzle (C) from the opening of the tapered area (1).

The compressed air is connected to a tube (R) by means of a connector (E1), where the metal tube (R) is wound about the heated metal cylinder (G10) to form a coil, in which the number of turns of the tube (R) around the cylinder (G10) is determined according to requirements. A shell (G11), made of the same material as the heated cylinder (G10) encloses the coil tube (R). The metal cylinder (G10) and the corresponding outer shell (G11) constitute a heated block (N), preferably obtained in one piece with the body of the secondary nozzle (C).

According to the present invention, in fact, it is very important to be able to precisely control the temperature of the air that hits the filament (U) exiting the nozzle (W1) in a semi-liquefied state, so as to obtain nano/microfibers which are deposited on the surface of the three-dimensional mold (ST1).

The tube (R) consists of heat-resistant conductive material, preferably metallic, and has a connector (E1) so that it is connectable to a source of compressed air, with a pressure preferably from 0.1 to 10 bar.

The pressurized hot air flow is essential for the operation of the print head according to the finding, therefore said tube (R) is wound in a spiral about the heated cylinder (G10), so as to heat the pressurized air to the required temperature.

The flow of hot air exiting the secondary nozzle (C) carries the plastic filament therewith, which plastic filament exits already molten from the nozzle (W1) of the print head and, during such transport, the filament stretches, thus creating continuous random nano/microfibers.

By varying the air flow pressure, the temperature, the inner and outer diameter of the nozzles and the distance of the print head from the 3D mold on which the material is deposited, the features of the deposited fiber vary.

According to the present invention, the air exiting through the tube (R) is heated and exits from the secondary nozzle (C) at a temperature comprised between 200 and 350°C, preferably above 260°C. The temperature is adjusted so that the material of the filament is not degraded.

Accordingly, the inlet of hot pressurized air with a direction offset with respect to the direction of the printing filament creates a vortical motion directed around the nozzle (W1) which, in addition to improving the maintenance of the inner temperature of the hot part of the print head, also improves the distribution of the fibers over the mold.

such polymeric nano/microfibers, characterized by a diameter negligible with respect to the length and arranged in a homogeneous and random manner, have good thermal and mechanical properties, and are optimal for producing lightweight and resistant items of clothing, based on production requirements.

The fiber emitted by the print head may have different peculiar features, depending on the set parameters.

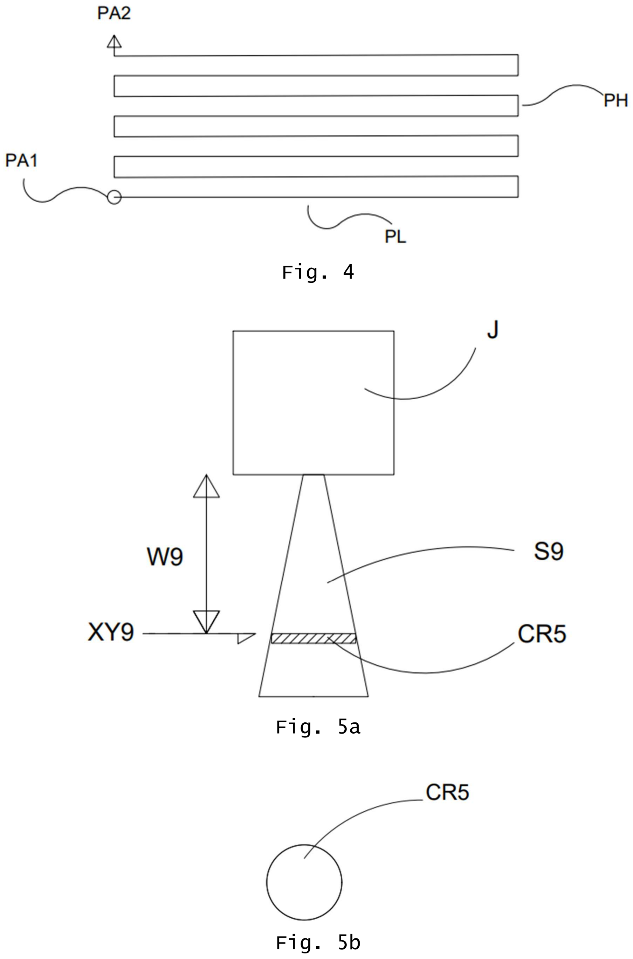

with reference to Figure 4, the path of the print head with respect to the mold has a start point (PA1) and an end point (PA2). Such virtual vector path is such to move the print head along a path that covers the entire surface of interest of the mold, at a constant speed and at a constant distance, while keeping - point by point - the print head always perpendicular to the surface of the 3D mold. Such distance from the mold is preferably comprised between 0.5cm and 20cm.

The distance between a head passage and the adjacent one must be equal to, or less than the circumference or area (CR5) of deposition of the print material (Figures 5a and 5b).

Advantageously, increasing or decreasing this overlap of the passages increases or decreases the thickness of the deposited material and therefore, for example, the robustness of the finished product.

The features of the product extractable from the mold vary based on:
- Air flow temperature
- Air flow pressure
- Heating block temperature (Print head)
- Insertion speed of the 3D print filament into the print head
- Inner nozzle (W1), preferably with a diameter from 0.2mm to 0.8mm
- Secondary nozzle (C), preferably with a diameter from 2mm to 3mm
- Distance between outlet point of the polymeric nano/micro fibers and mold surface (ST1)
- Print head side sliding speed
- variation of the distance (PH) between two adjacent deposition lines.

The 3D mold is made of plastic material such as, for example, Teflon, Nylon, ABS, PET, or resin.

The shape of the 3D mold corresponds to the shape of the object to be molded, and a mold with a smooth surface facilitates demolding of the molded object.

Given the covering feature and the fusion feature between polymers deposited during printing, the surface of the mold may have one or more accommodations to accommodate elements that must be part of the finished product: if, for example, a jacket is to be printed, a groove may accommodate a zipper.

The zipper accommodated in the groove will be partially covered by the fiber emitted by the print head, so as to result included in the body of the jacket itself. In order to achieve such object, it is necessary to adjust the features of fiber emission and of head movement, so as to obtain the fastening of the zipper to the printed fabric for producing the jacket.

The shape of the 3D mold depends on the type of product to be molded and, according to the complexity of the chosen product, the mold may be composed of one or more sections, so as to facilitate the extraction of the molded product.

Finally, the mold has a fastening system such as to allow it to be secured in the desired position.

In conclusion, it is appropriate to note that, in the case where only one robotic arm is provided and the surface involved in the printing is not only on one side of the 3D mold, it will be appropriate that the mold be rotatable about a vertical axis, manually or by drive means.

## Claims

1. A system for depositing continuous nano-fiber filaments on the surface of a 3D mold (ST1), **characterized in that** it comprises one or more robotic arms (AR1, AR2) with at least 5 degrees of freedom, provided with respective print heads (J1, J2), configured to move such heads keeping them - point by point - perpendicular to the surface of the 3D mold (ST1), onto which a multilayer fabric is made by depositing the polymeric nano/microfibers, obtained by blowing hot-pressurized and temperature-controlled air on the filament exiting the print head; wherein each print head (J1, J2) is configured to emit and deposit, continuously, in an even and random manner, the nano/microfiber on said 3D mold (ST1) of non-stick material; and wherein each print head (J1, J2) comprises in combination:
- a nozzle (W1) of the known type, extruding the material in a semi-liquid phase,
- a side module, fixed onto said nozzle (W1), provided with a device which blows hot pressurized air in the tangential and coaxial direction against a filament (U) exiting the nozzle (W1) and with two heating blocks (N, S) that heat the aforesaid elements;
wherein the compressed air is connected to a tube (R) by means of a connector (E1), where the metal tube (R) is wound in turns about a heated metal cylinder (G10) to form a coil where said air is heated; wherein a shell (G11), of the same material as the heated cylinder (G10) encloses the coil tube (R) and wherein the metal cylinder (G10) and the relative outer shell (G11) form a heated block (N);
and wherein the distance (D1) between a through hole (K) of the nozzle (W1) and the tapered area (1) provided in the heating block (S) at the outlet of the same nozzle is variable depending on the requirements, adjusting it mechanically by means of a thread (F6).

2. A system according to claim 1, **characterized in that** said filament (U), which has a negligible diameter with respect to the length and is stored in coils, consists of one or more polymers, thermoplastic polymers, elastomers, nanoparticles or additives, such as, for example, a bioplastic, such as polylactic acid (PLA), or of a technical plastic material, such as polycarbonate, acrylonitrile-butadiene-styrene, polyamide, TPU, PTFE and PET-G.

3. A system according to one of the preceding claims, **characterized in that** the filament (U) is inserted into a first metal tube (w2) and flows into a channel (F), with a longitudinal axis z, defined by the first metal tube (w2) itself and the nozzle (W1) which is arranged coaxially and adjacent downstream of the first tube (w2), into which the filament itself is heated and exits in a semi-liquid phase.

4. A system according to one of the preceding claims, **characterized in that** said side module is fixed to the print head to reduce heat loss and increase thermal efficiency.

5. A system according to claim 3, **characterized in that** the filament (U) is inserted, still in solid phase, inside said first metal tube (w2), which, in the initial part, is provided with cooling flaps (P), so that the filament (U) does not melt immediately and may be pushed towards the nozzle (W1); wherein said first tube (w2) and said nozzle (W1) both have an inner diameter greater than or equal to the diameter of the filament (U), and they are made of heat-resistant materials, and are fixed - for example through threading - to a heating block (S) consisting of an upper block (B) and a lower one (C), configured to melt the filament (U); said lower heating block (C), being provided with a cavity for accommodating the nozzle (W1) with a tapering (1) of the area at the outlet of the same nozzle, few millimeters away from the through hole (K) thereof, to thus create a sort of secondary nozzle (C), where the extruded filament meets the tangential and coaxial pressurized hot air jet, in a meeting area (V).

6. A system according to the preceding claim, **characterized in that** the secondary nozzle (C) and the nozzle (W1) inside it are internally conical in shape and the opening angles of the cones are comprised between 60° and 140°; wherein the cones are configured so that their vertices are on the longitudinal axis z, in the meeting area (v).

7. A system according to claim 5 or 6, **characterized in that** the print head (J1, J2) contains at least one air inlet duct (Q) substantially arranged at 90° with respect to z-axis and offset with Y- axis tangential to the z-axis of the nozzle (W1) and of the secondary nozzle (C); thus obtaining that by means of the side inlet opening (Q), air is conveyed to rotate about the nozzle (W1) and forced to exit the secondary nozzle (C) from the opening of the tapered area (1).

8. A system according to claim 1, **characterized in that** said heated block (N) is preferably made in one piece with the body of the secondary nozzle (C).

9. A system according to the preceding claim, **characterized in that** the tube (R) consists of heat-resistant conductive material, preferably metallic, and has a connector (E1) so as to be connectable to a source of compressed air, with a pressure preferably comprised between 0.1 and 10 bar; said tube (R) being spirally wound about the heated cylinder (G10), so as to heat the pressurized air to the desired temperature.

10. A system according to one of claims from 5 onwards, **characterized in that** the flow of hot air exiting the secondary nozzle (C) carries the plastic filament therewith, which plastic filament exits already molten from the nozzle (W1) of the print head, and during such transport the filament stretches thus creating continuous random nano/microfibers.

11. A system according to the preceding claim, **characterized in that** by varying the air flow pressure, the temperature, the inner and outer diameter of the nozzles and the distance of the print head from the 3D mold on which the material is deposited, the features of the deposited fiber vary.

12. A system according to one of claims from 5 onwards, **characterized in that** the air flowing through the tube (R) heats up and exits the secondary nozzle (C) at a temperature comprised between 200 and 350°C, preferably above 260°C; the temperature is adjusted so that the material of the filament is not degraded.

13. A system according to one of the preceding claims, **characterized in that** it is configured so that the path of the print head (J1, J2) with respect to the mold (ST1) has a start point (PA1) and an end point (PA2), and is such as to cause the print head to move along a path covering the entire surface of interest of the mold, at a constant speed and with constant distance, preferably keeping the print head always perpendicular to the mold surface.

14. A system according to the preceding claim, **characterized in that** said distance of the print head from the mold is preferably comprised between 0.5cm and 20cm, and **in that** the distance between a head passage and the adjacent one is equal to or less than the circumference or area (CR5) of deposition of the print material.

15. A system according to one of the preceding claims, **characterized in that** the surface of the mold (ST1) is provided with one or more accommodations or grooves for housing elements that are to be part of the finished product: for example, when a jacket is to be printed, a groove could accommodate a zip.

16. A system according to one of the preceding claims, **characterized in that** the shape of the mold depends on the type of product to be molded and **in that**, according to the complexity of the chosen product, the mold may be composed of one or more sections so as to facilitate the extraction of the molded product.
